# EUROPEAN PATENT APPLICATION

(11) **EP 3 733 442 A1**
(43) Date of publication of application: **04.11.2020**
(21) Application number: 19201082.5
(22) Date of filing: 02.10.2019
(51) Int. Cl.: B60L 15/20, B60W 50/08, B60W 50/10

(54) **VEHICLE EMULATOR, MOBILE DEVICE FOR A VEHICLE EMULATOR AND A METHOD FOR EMULATING A VEHICLE EXPERIENCE**

(30) Priority: 02.05.2019 EP 19172222
(71) Applicant: Algebra Automobili S.r.l., CAP 41011 Modena (IT)
(72) Inventor: Bilgin, Sener, 35433 Urla/Izmir (TR)
(74) Representative: LifeTech IP Spies & Behrndt Patentanwälte PartG mbB

(57) **Abstract**

A vehicle emulator for emulating a vehicle experience of a combustion engine by using an electric vehicle is disclosed. The vehicle emulator comprises: a communication interface (110) configured to communicate with a mobile device (50) of a user (60) and a control unit (120). The control unit (120) is configured to receive from the mobile device (50) a specification of a user-designed vehicle, and to generate control signals (125) for controlling the electric vehicle in accordance to the specification of the user-designed vehicle. The design options (330, 340, 350, ...) include one or more of the following: an engine type (330), a number of cylinders (340), an engine volume (350), turbo settings (360), gear settings (370), transmission settings (380), sound effects, vibration effects.

## Description

The present invention relates to a vehicle emulator, a mobile device for a vehicle emulator and a method for emulating a vehicle experience of a combustion engine and, in particular, to a user-designed internal combustion vehicle emulation using an electric vehicle (EV). This disclosure presents further an EV used to emulate the motion dynamic, the sound, the seats vibrations of internal combustion vehicles designed by the user through an application.

### BACKGROUND

Internal combustion vehicles (ICVs) offers special user's experience in terms of acceleration profile, sound, and vibrations felt by the user's body during the drive (e.g. vibrations of seats, gear shifter/lever, clutch, suspensions). However due to pollution issues, ICVs may be replaced by electric vehicles (EVs).

The driving experience of EVs is completely different. EVs are very quiet with only little vibrations and the power characteristic is rather flat in that the provided power depends only little on the revolutions speed of the engine. Standard electric vehicles do not provide the user experience which many drivers expect from a vehicle. They miss the driving characteristics which they know from ICVs.

Therefore, there is a need to meet the expectations of a user with respect to the vehicle experience when driving an electric vehicle.

### SUMMARY OF THE INVENTION

At least some of the above-mentioned problems are solved by a vehicle emulator according to claim 1, a mobile device according to claim 8 or a method according to claim 13. The dependent claims refer to further advantageous realizations of the subject matter of the independent claims.

The present invention relates to a vehicle emulator for emulating a vehicle experience of a combustion engine by using an electric vehicle. The vehicle emulator comprising: a communication interface configured to communicate with a mobile device of a user and a control unit. The control unit is configured:
- to receive from the mobile device a specification of a user-designed vehicle, and
- to generate control signals for controlling the electric vehicle in accordance to the specification of the user-designed vehicle.

The design options include one or more of the following: an engine type, number of cylinders, engine volume, turbo settings, gear settings, transmission settings, sound effects, vibration effects. Apart from these design options other options may be selected as well.

In order to receive the desired user settings, the mobile device may comprise a designated application providing a user interface to enable the user to select the available options. The control unit of the emulator may be adapted to provide all relevant information for this application of the mobile device. For example, dependent on the power of the electric vehicle, only limited design options may be implementable by the particular electric vehicle. In a preferred embodiment, the electric vehicle is able allow as many design options as possible.

It is possible that the designated application on the mobile device handles all user interactions and requests all needed information to determine the specification of the user-designed vehicle. Then, the resulting specification needs only to be transmitted to the control unit of the vehicle emulator. In this embodiment, the vehicle emulator does not need any information about the particular user.

On the hand, also the vehicle emulator may control the process of determining the specification of the user-designed vehicle. Therefore, according to yet another embodiment, the control unit is further configured to perform at least one of the following:
- to sign in the user;
- to prompt the user on the mobile device to select design options for the vehicle experience, thereby defining a user-designed vehicle to be implemented by the electric vehicle;
- to save selected design options and/or associate the selected design options with the user;
- to allow signing off the user;
- to remove the selected design options upon signing off the user and/or upon prompting by the user.

This provides the advantage that no personal information needs to be (permanently) stored on the vehicle, but only on the mobile device. The emulator on the electric vehicle may thus be universal (i.e. user-independent) and can be configured by various users in their own individual way.

The electric vehicle may further comprise dynamic seats with one or more electric motors or one or more vibration units to activate the dynamic seats. Then, optionally, the control unit may be configured to control the dynamic seats to enhance a user experience while driving the user-designed vehicle.

According to yet another embodiment, the electric vehicle comprises one or more speakers in dummy exhaust pipes and/or in an engine compartment and/or in the interior space of the electric vehicle. Accordingly, the control unit may be further configured to control the one or more speakers for providing a realistic audio appearance and/or emulating (incorporating) an aging effect.

According to yet another embodiment, the vehicle comprises a screen arranged on a top portion of a gear lever. Accordingly, the control unit may be further configured to display different configuration signs associated with the selected gear settings (e.g. the implemented/selected gear box design). It is understood that an electric vehicle may not need a gear lever or gear box. Therefore, the gear lever may be just another input element to receive inputs related to a desired change in the motor characteristics by an emulated gear shift.

According to yet another embodiment, the electric vehicle comprises a vehicle control unit for providing vehicle control signals to control at least one vehicle component (e.g. the vehicle power train) and the vehicle emulator may further comprise a comparison unit. The comparison unit may be configured to compare the control signals provided by the control unit with the electric vehicle control signals provided by the vehicle control unit, and to provide a result to the vehicle control unit to adjust the vehicle control signals based thereon. The result of the comparison unit may be a deviation signal (e.g. an error signal).

According to yet another embodiment, the selectable design options relate to selectable vehicles that may or may not relate to known vehicle brands.

Embodiments relate also to a mobile device comprising: a data processing unit and a mobile communication interface configured to interact with a vehicle emulator as defined before. The interaction may include receiving inputs and providing data (e.g. the determined specification of the user-designed vehicle) to the emulator.

According to yet another embodiment, the data processing unit of the mobile device is configured to communicate with different vehicle emulators associated with different electric vehicles for emulating the user-designed vehicle on different electric vehicles. This has the advantage that the user can change the electric vehicles while maintaining the particular user design when driving the different electric vehicles.

Embodiments relate also to an electric vehicle with a vehicle emulator as defined before.

According to yet another embodiment, the electric vehicle further comprises a vehicle control unit and vehicle hardware components (e.g. a vehicle power train), wherein the vehicle control unit may be configured to receive the control signals from the vehicle emulator and to provide, in dependence on the received control signals, vehicle control signals for the vehicle hardware components. According to yet another embodiment, the vehicle control unit is further configured to provide the vehicle control signals based on a result of the comparison unit of the vehicle emulator and/or based on electric vehicle output signals generated by the vehicle hardware components (e.g. to optimize the operation).

Embodiments relate also to a method for emulating a vehicle experience of a combustion engine by using an electric vehicle. The method comprises:
- prompting the user, on the mobile device, to select design options for the vehicle experience, thereby defining a user-designed vehicle to be implemented by the electric vehicle;
- receiving from the mobile device a specification of the user-designed vehicle; and
- generating control signals for controlling the electric vehicle in accordance to the specification of the user-designed vehicle.

The design options include one or more of the following: an engine type, a number of cylinders, an engine volume, turbo settings, gear settings, transmission settings, sound effects, vibration effects.

This method may also be implemented in software or a computer program product and the order of steps may not be important to achieve the desired effect. Embodiments of the present invention can, in particular, be in an electronic control unit (ECU) or implemented by software or a software module in an ECU. Therefore, embodiments relate also to a computer program having a program code for performing the method, when the computer program is executed on a processor.

Embodiments provide the advantage of allowing to emulate more or less any desired combustion engine by using an EV, not only with respect to the motor characteristics, but also with respect to a sound experience.

Embodiments provide particularly a universal vehicle emulator configurable by a mobile device of the user to design any possible electric vehicle in a user-specific way. This user-specific way does not rely on known vehicle characteristics of other combustion engines. Instead, the user can adjust more or less every characteristic of the vehicle to achieve a maximum of personalization of the vehicle experience when driving the emulated electric vehicle.

### BRIEF DESCRIPTION OF THE DRAWINGS

Various embodiments of the present invention will be described in the following by way of examples only, and with respect to the accompanying drawings, in which:
- Fig. 1: depicts schematically a vehicle emulator according to one embodiment.
- Fig. 2: illustrates a simplified diagram of a vehicle emulation process.
- Fig. 3: illustrates the user's body animation setup (seat, gear shifter, pedals) according to the emulated vehicle motion dynamics.
- Figs. 4a-4h: illustrate the application on a mobile device to setup the user-defined vehicle design.
- Figs. 5a, 5b: illustrate multiple sound buttons for a horn, a dummy exhaust pipe with a speaker and an outdoor speaker positioned in the engine compartment for vehicle sound emulation.
- Fig. 6: shows a flow chart of a method for a user-designed vehicle emulation according to an embodiment.

### DETAILED DESCRIPTION

Various examples will now be described more fully with reference to the accompanying drawings in which some examples are illustrated.

Accordingly, while examples are capable of various modifications and alternative forms, the illustrative examples in the figures and will herein be described in detail. It should be understood, however, that there is no intent to limit examples to the particular forms disclosed, but on the contrary, examples are to cover all modifications, equivalents, and alternatives falling within the scope of the disclosure. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing illustrative examples only and is not intended to be limiting. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements and/or components, but do not preclude the presence or addition of one or more other features, steps, operations, elements, components and/or groups thereof.

Unless otherwise defined, all terms (including technical and scientific terms) used herein have the same meaning as commonly understood by one of ordinary skill in the art to which examples belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

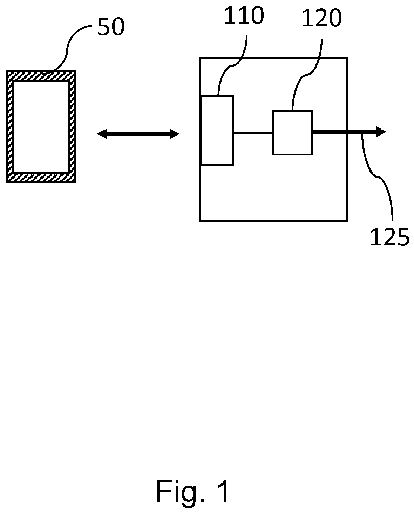

**Fig. 1** shows a schematic view of a vehicle emulator according to an embodiment of the present invention. This emulator is suitable, when used in an electric vehicle (EV), to emulate a vehicle experience of a combustion engine. The vehicle emulator comprises: a communication interface 110 configured to communicate with a mobile device 50 of a user and a control unit 120. The control unit 120 is configured to receive from the mobile device 50 a specification of the user-designed vehicle and to generate control signals 125 for controlling the EV in accordance to the specification of the user-designed vehicle. The design options include one or more of the following: an engine type, number of cylinders, engine volume, turbo settings, gear settings, transmission settings, sound effects, vibration effects.

As it will be described below in more detail, the determination of the specification of the user-design can be done the mobile device 50 and the result can be transmitted to the control unit 120. However, the invention shall not be limited to this setup. It is also possible that the control unit controls the process of determination of the specification and requests all information through the mobile device from the user. Hence, the control unit 120 may further be configured to prompt the user on the mobile device 50 to select design options for the vehicle experience, thereby defining a user-designed vehicle to be implemented by the EV.

Advantageously, the hardware of the EV, especially the battery, the powertrain, the chassis etc., is designed to be capable of providing the highest acceleration profile exhibited by the top performing internal combustion vehicles (ICVs). Therefore, the EV may emulate a broad range of ICVs drive characteristics.

To increase the vehicle experience further, motors may be attached to seats, the gear lever (shifter) and the pedals to provide some level of vibrations that mimic the dynamic drive vibrations of the emulated ICV. Therefore, embodiments do not rely only on emulating an engine characteristic, but shall enable ideally a complete vehicle experience which may include, in particular, sound and vibration effects.

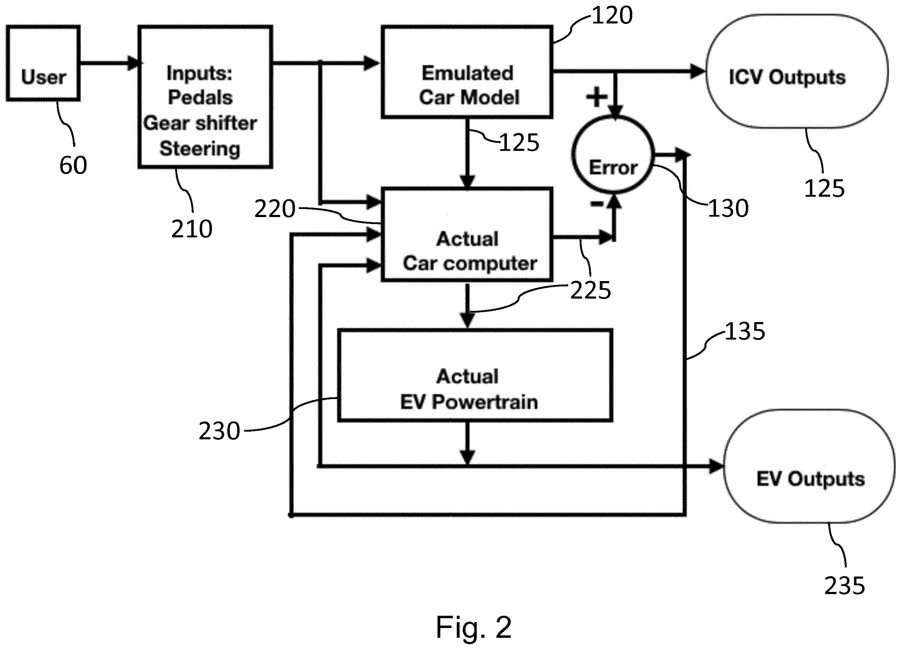

**Fig. 2** depict further details of the vehicle emulator implemented in an EV. In the EV the user 60 operates the vehicle by using inputs 210. These inputs may include pedals for acceleration, braking, gear shifting or steering of the vehicle. The inputs 210 will provide corresponding input signals to the control unit 120 of the vehicle emulator and to a vehicle control unit 220 (e.g. a computer) that is configured to generate electric vehicle control signals 225 that depend on the inputs 210 and mimic the characteristic to be emulated. The vehicle control signals 225 are used to control the actual EV hardware components 230 (e.g. power train) to achieve a desired action. The desired action may include accelerating the vehicle, braking the vehicle, steering the vehicle etc. The EV hardware components 230 generates EV outputs 235 that may control the actual actuators (electric motor(s), braking actuators, steering actuators etc.)

The emulator further includes a comparison unit 130 that compares the control signals 125 generated by the control unit 120 with vehicle control signals 225 generated by the vehicle control unit 220. The comparison unit 130 generates as result a deviation signal 135 (e.g. an error signal in the simplest case) which depends on the deviation between the control signals 125 and the vehicle control signals 225. This deviation signal 135 relates to a degree to which the desired emulation is achieved and this signal is fed back to EV control unit 220 to adjust, based thereon, the generated EV control signals 225.

In addition, also the EV outputs 235 are fed back to the EV control unit 220 in order to achieve the desired emulation of the electric vehicle based on the design options that were input by the user 60 prior driving the EV. The mobile device used by the user 60 to program the control unit 120 is not depicted in Fig. 2.

In may also be possible that the user designed ICV model is loaded as a mathematical model in the vehicle control unit 220 to perform a real-time simulation of the vehicle drive. The model is run by taking the inputs 210 (e.g. throttle, brake, clutch, gear, steering, positions) from the user 60 and computing the emulated ICV outputs 125 (e.g. signals corresponding to acceleration, speed, vibrations, sound). The EV control unit 220 thus reads the user's inputs 210 as well and controls the EV hardware 230 to provide an EV outputs 235 that match the outputs of the emulated ICV 125. Based on the error 135 between the EV control signals 125, the simulated ICV outputs 225, and the actual EV outputs 235 that are all fed back to the control unit 220, new command values can be calculated that will suppress the eventual error 135.

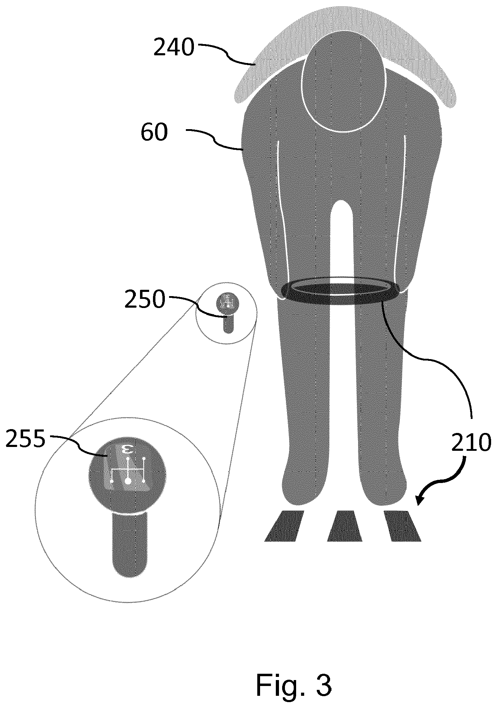

**Fig. 3** shows the user 60 while sitting in the electric vehicle on a seat 240 and using the inputs 210 and a gear lever 250 to interact with the electric vehicle. According to an embodiment, the gear shift 250 may comprise a display 255 in order to show a desired gear setting. The desired gear setting may relate to the number of available gears, but also to the position of the different gears which the user can switch in order to accelerate the electric vehicle.

According the embodiments, also the drive vibration or g-forces exerted on the user by the ICV are emulated. For this, the seat 240 may include built-in motors or other actuation units to push-pull the user 60 according to the dynamic acceleration or brake profiles of the vehicle. Similarly, according to further embodiments additional motors or actuation units may be installed on the three pedals 210, the gear shifter 250 and the steering wheel 210 to apply vibrations on these inputs 210, 250 so that the feet and the hands of the user 60 feel the vibrations that mimic the corresponding actions of these components of an ICV during a drive.

Furthermore, an onboard vehicle design interface software (e.g. installed on the vehicle control unit 220) may interact with a corresponding mobile application on the mobile device 50 (tablet, phone) to allow the user to design interactively the powertrain (e.g. internal combustion engine, transmission, gearbox) and others special features (e.g. vehicle sound adjustment, horn) of the vehicle to be emulated.

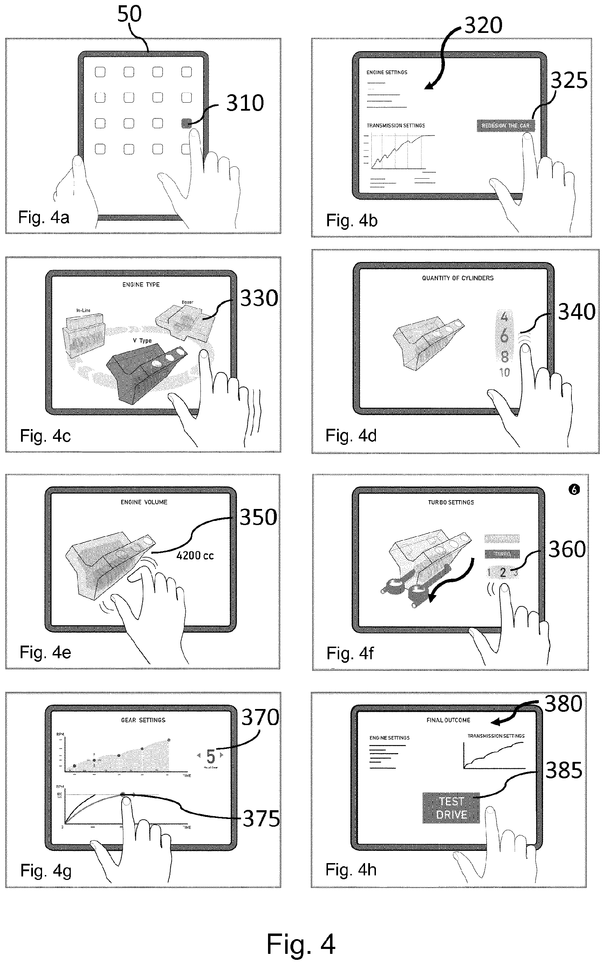

**Figs. 4a-4h** depict further details of the design process of the ICV using the mobile device 50 according to further embodiments. This exemplary design process can be used by any user to build their own ICV. The mobile device 50 may be a tablet or a mobile telephone (for example a smartphone) or any other processing unit which is able to receive user input and to communicate with the vehicle emulator implemented in the electric vehicle.

**Fig. 4a** depicts a starting screen with a button 310 to activate the corresponding application to setup the design options which the user 60 wishes to be emulated by the electric vehicle. **Fig. 4b** depicts an exemplary starting screen after the application 310 has been launched. For example, the default engine and transmission settings 320 may be depicted on the left-hand side as status information of the current engine settings (e.g Diesel V8 engine 200hp). If the user wishes to redesign the vehicle, an interaction element 325 may be used that is shown, for example, on the right-hand side.

It is understood that theses and the following elements may be placed differently without departing from the invention.

**Fig. 4c** depicts as next step the setting of the engine type 330. For example, the user may select a V-type, an inline type or a boxer-type engine. If the user selects one of the engines the application proceeds with **Fig. 4d**, wherein the number of cylinders 340 can be selected. For example, a computer-implemented wheel may be used in order select a number of cylinders that shall be emulated by the electric vehicle.

Next, in **Fig. 4e**, the application asks to select the engine volume 350. For example, in Fig. 4e the engine has an exemplary volume of 4.2 liters which may be enhanced or lowered by particular gestures of the fingers. For example, spreading the fingers will increase the volume and moving the fingers toward each other will decrease the volume. **Fig. 4f** depicts the next step, where the user is prompted to select a desired the turbo settings 360. For example, the user can select the number of turbo chargers or the stages of turbo charging. Therefore, not only the number cylinders, but also their shape, the displacement volume, turbocharged engine or naturally aspirated engine can be selected freely.

Others parameters such as the power source (e.g. diesel, LPG, gasoline) the transmission type (rear-/front-/all-wheel drive) can be edited as well.

Next, **Fig. 4g** illustrates the setup of the gear settings. For example, the user can select the number of gears 370 (e.g. by a graphical wheel or any other interaction element) and at which velocity a particular gear should be shifted. The gear shift setting is indicated in the lower portion, where the user can select the speed for each gear shift by moving a graphical point 375 with the finger to the right or to the left in order to increase a possible achievable speed related to one particular gear, which is high-lighted in the upper portion.

Therefore, the gear box can be designed in a drag-tossed fashion for single speed gear or multiple speed gears, each gear ratio being set independently. The resultant rated acceleration profile and the speed-time graph for all gears of the designed ICV are shown by the application on the mobile device 50.

Finally, in **Fig. 4h** the user will receive as last step, a summary 380 of the selected options, i.e. the user-designed settings 380. A test drive element 385 may be provided to allow the user a test drive whether the selected design options meet her/his expectations. Therefore, upon selecting a test drive the designed ICV the selected specification the emulated ICV is uploaded to the EV control unit 220 (see Fig. 2) so that the user 60 can test the settings.

According to further embodiment, a 3D model of an exemplary car may be updated dynamically as the design progresses. It may rotate in three dimensions to show the vehicle components. At the end, the result may be saved onboard or online for sharing with others.

It is understood that the order in this selection process can be different. According to further embodiments, each or some icons on the mobile device 50 in Fig.4a may be clicked to design a particular feature of the vehicle as shown in Figs. 4b to 4h. On the other hand, the application on the mobile device may also automatically guide the user through the depicted design steps.

Although they are not shown on the application, the transducers can be designed as well. The type of steering wheel (hydraulic or electric), type of pedals (direct actuation/drive by wire) may be selected too. As the ICV can have different numbers of gears, the smart watch-like screen 255 on top of the gear shifter arm 250 (see Fig. 3) may be used to display the gearbox configuration sign. Some vehicle or user-related information/animation can be displayed on the screen 255 as well.

Further customization may include editing the vehicle sound (e.g. set the vehicle age, sound decibel), the horn sound (e.g. four different sounds for specifics street events, and the brake sensitivity).

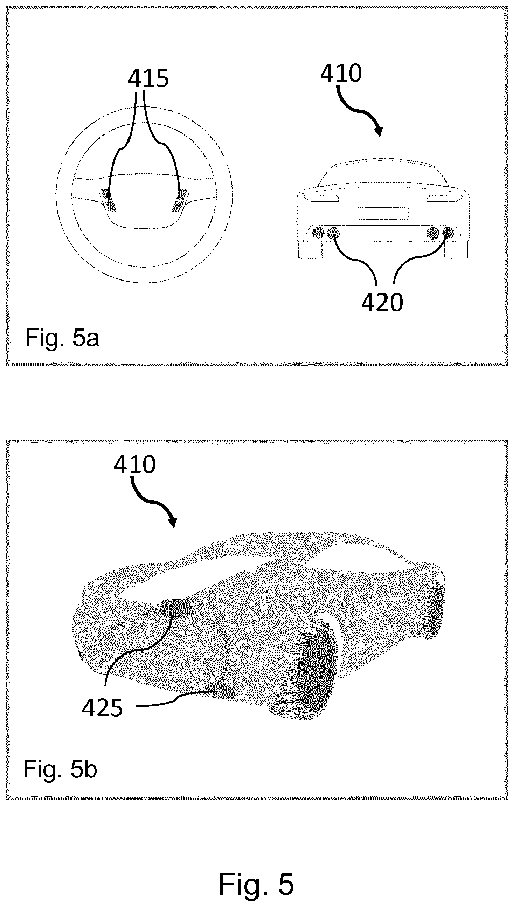

**Fig. 5a** depicts the front side of the model of the electric vehicle 410 with several loudspeakers 420 arranged in or near the engine compartment in order to generate a sound experience which come as close as possible to a desired/selected combustion engine. The loudspeakers 420 may, for example, be controlled by control elements 415 on the steering wheel of the vehicle. The control elements 415 can be used to activate or deactivate the loudspeakers 420, but also in order to adjust a volume or frequency or sound characteristic of the loudspeakers 420.

**Fig. 5b** depicts optional loudspeakers 425 at the backside of the vehicle 410. The loudspeakers 425 may be arranged in (dummy) exhaust pipes of the electric vehicle in order to generate a realistic sound level which would have been generated by the desired combustion engine.

Therefore, in order to give to user a complete ICVs drive experience, a sound characterized by the emulated ICV may be synthesized and played in the engine compartment (e.g. speaker 420) and through a speaker 425 placed in a dummy exhaust pipe like a music instrument.

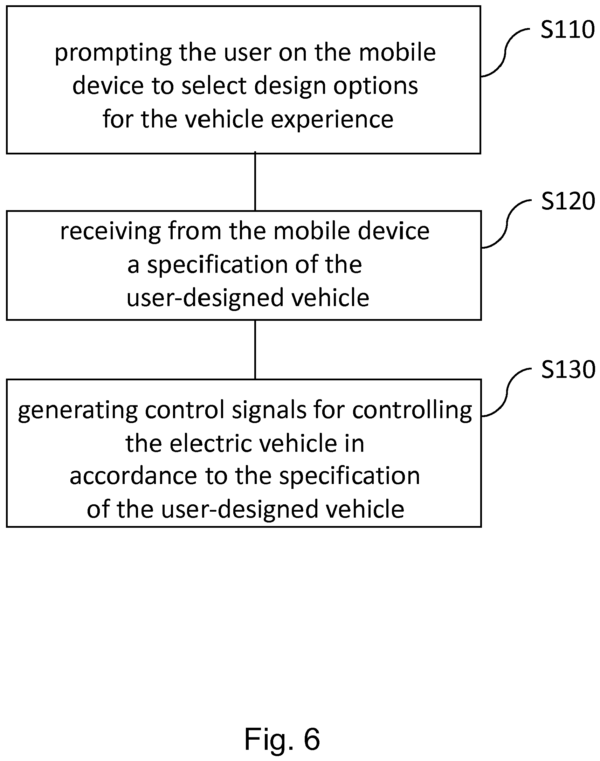

**Fig. 6** depicts a flow chart of a method for emulating a vehicle experience of a combustion engine by using an electric vehicle. The method comprising:
- prompting S110 the user, on the mobile device 50, to select design options for the vehicle experience, thereby defining user-designed vehicle to be implemented by the electric vehicle;
- receiving S120 from the mobile device 50 a specification of the user-designed vehicle; and
- generating S130 control signals 125 for controlling the electric vehicle in accordance to the specification of the user-designed vehicle,
wherein the design options 330, 340, 350, ... include one or more of the following: an engine type 330, a number of cylinders 340, an engine volume 350, turbo settings 360, gear settings 370, transmission settings 380, sound effects, vibration effects. The specification of the user-designed vehicle may be generated on the mobile device 50 based on the selections of the user.

This method or part thereof may also be a computer-implemented method. Therefore, embodiments are also intended to cover program storage devices, e.g., digital data storage media, which are machine or computer readable and encode machine-executable or computer-executable programs of instructions, wherein the instructions perform some or all of the acts of the above-described methods, when executed on the computer or processor.

Since embodiments rely also on a mobile device, the emulation process does not need to relate to a particular electric vehicle. Different kinds of electric vehicles (as long as the emulator software is installed) can be designed by the mobile device of the user to create the user-designed vehicle. If the user, for example, leaves the electric vehicle, the selected design options can be removed from the control unit 220 of the electric vehicle. Any other user may then design the electric vehicle in her/his own personal way. This is of advantage for rental cars or car-sharing systems to allow each driver of these cars to emulate a desired car. On the other hand, when a particular user uses the electric car frequently, it may be possible to store the user-designed options in the EV to enable an immediate starting of the EV without the need of a redesign every time.

The vehicle design described above can also be done by drag and drop of pre-made building blocks (e.g. V12 diesel turbo engine, 5-speed gearbox) or in some cases by hand drawing the feature (e.g. engine rated acceleration graph) or by entering numerical value (e.g. 0-100km/h acceleration time, top speed, 1:10 gear ratio).

According to further embodiments, a pre-designed car packages (e.g. can, car2, car3) can be listed in a catalogue and can be selected from the display. After uploading the characteristic of one of these pre-arranged cars to the vehicle control unit 220 the user can make a test drive. Future cars built by other users can be added to the view-only cars catalogue for future use.

Advantageous aspects of embodiments relate to:
- an EV that emulates a user designed internal combustion vehicle dynamics;
- an EV with dynamics seats that enhance users experience in terms of felt vibrations while driving an ICV;
- an application that allows user to design his/her own ICV and emulate it in a real world;
- an ICV sound tuning that incorporates the aging effect on the vehicle sound;
- a screen placed on the top of the gear shifter arm to display multiple gearbox configuration sign;
- an ICV sound system for EV, that places the speakers in a dummy exhaust pipe and in the engine compartment for a more realistic visual/audio appearance.

With an electric vehicle and an application according to embodiments, the user can design and emulate an internal combustion vehicle in terms of drive acceleration/speed profiles, sound and others parameters, thus obtaining the possibility of feeling limitless unique user-experiences. Thus, embodiments overcome the failure of standard products - even the most well engineered ones - to provide long lasting unique user experience to people.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### List of reference signs

- 50: mobile device
- 60: user
- 110: communication interface
- 120: control unit
- 125: control signals for controlling the electric vehicle
- 130: comparison unit
- 135: result of comparison (e.g. a deviation signal)
- 330, 340, ...: selectable design options
- 210: inputs
- 220: (electric) vehicle control unit
- 225: vehicle control signals
- 230: vehicle hardware components (e.g. power train)
- 235: (electric vehicle) output signals
- 240: dynamic seats
- 250: gear lever
- 255: display on the gear lever
- 410: model for user-designed car
- 415: control elements
- 420, 425: loud speaker(s)

## Claims

1. A vehicle emulator for emulating a vehicle experience of a combustion engine by using an electric vehicle, the vehicle emulator comprising:
a communication interface (110) configured to communicate with a mobile device (50) of a user (60);
a control unit (120) configured:
- to receive from the mobile device (50) a specification of a user-designed vehicle, and
- to generate control signals (125) for controlling the electric vehicle in accordance to the specification of the user-designed vehicle,
wherein the design options (330, 340, 350, ...) include one or more of the following: an engine type (330), a number of cylinders (340), an engine volume (350), turbo settings (360), gear settings (370), transmission settings (380), sound effects, vibration effects.

2. The vehicle emulator according to claim 1, wherein the control unit (120) is further configured to perform at least one of the following:
- to sign in the user (60);
- to prompt the user (60) on the mobile device (50) to select design options (330, 340, 350, ...) for the vehicle experience, thereby defining a user-designed vehicle to be implemented by the electric vehicle;
- to save selected design options (330, 340, ...) and/or associate the selected design options (330, 340, ...) with the user (60);
- to allow signing off the user (60);
- to remove the selected design options (330, 340, 350, ...) upon signing off the user (60) and/or upon prompting by the user (60).

3. The vehicle emulator according to claim 1 or claim 2, wherein the electric vehicle comprises dynamic seats (240) with one or more electric motors or one or more vibration units to activate the dynamic seats (240),
the control unit (120) being further configured to control the dynamic seats (240) to enhance a user experience while driving the user-designed vehicle.

4. The vehicle emulator according to one of the preceding claims, wherein the electric vehicle comprises one or more speakers in dummy exhaust pipes and/or in an engine compartment and/or in the interior space of the electric vehicle,
the control unit (120) being further configured to control the one or more speakers for providing a realistic audio appearance and/or emulating an aging effect.

5. The vehicle emulator according to one of the preceding claims, wherein the vehicle comprises a screen (255) arranged on a top portion of a gear lever (250),
the control unit (120) being further configured to display different configuration signs associated with the selected gear settings.

6. The vehicle emulator according to one of the preceding claims, wherein the electric vehicle comprises a vehicle control unit (220) for providing vehicle control signals (225) to control vehicle hardware components (230); the vehicle emulator further comprising:
a comparison unit (130) configured to compare the control signals (125) provided by the control unit (120) with the electric vehicle control signals (225) provided by the vehicle control unit (220), and to provide a result (135) to the vehicle control unit (220) to adjust the vehicle control signals (225) based thereon.

7. The vehicle emulator according to one of the proceeding claims, wherein the selectable design options (330, 340, 350, ....) relate to selectable preconfigured vehicles.

8. A mobile device (50) comprising:
a data processing unit; and
a mobile communication interface,
wherein the mobile device (50) is configured to interact with a vehicle emulator according to one of the preceding claims.

9. The mobile device (50) according to claim 8, wherein the data processing unit of the mobile device (50) is further configured to communicate with different vehicle emulators associated with different electric vehicles for emulating the user-designed vehicle on the different electric vehicles.

10. An electric vehicle including a vehicle emulator according to one of the claims 1 to 7.

11. The electric vehicle according to claim 10, further comprising a vehicle control unit (220) and vehicle hardware components (230),
the vehicle control unit (220) being configured to receive the control signals (125) from the vehicle emulator and to provide, in dependence on the control signals (125), vehicle control signals (225) for the vehicle hardware components (230).

12. The electric vehicle according to claims 11, wherein the vehicle control unit (220) is further configured to provide the vehicle control signals (225) based on a result (135) of the comparison unit (130) of the vehicle emulator and based on electric vehicle output signals (235) generated by the vehicle power hardware components (230).

13. A method for emulating a vehicle experience of a combustion engine by using an electric vehicle, the method comprising:
prompting (S110) the user, on the mobile device, to select design options for the vehicle experience, thereby defining a user-designed vehicle to be implemented by the electric vehicle;
receiving (S120) from the mobile device (50) a specification of the user-designed vehicle; and
generating (S130) control signals (125) for controlling the electric vehicle in accordance to the specification of the user-designed vehicle,
wherein the design options (330, 340, 350, ...) include one or more of the following: an engine type (330), a number of cylinders (340), an engine volume (350), turbo settings (360), gear settings (370), transmission settings (380), sound effects, vibration effects.

14. A computer program product directly loadable into the internal memory of a digital computer, comprising software code portions for performing the steps of claim 13 when said product is run on a computer.
